(19) Europäisches Patentamt
European Patent Office
Office européen des brevets

(11) **EP 4 622 513 B1**

(12) **EUROPÄISCHE PATENTSCHRIFT**

(45) Veröffentlichungstag und Bekanntmachung des Hinweises auf die Patenterteilung:
**01.04.2026 Patentblatt 2026/14**

(21) Anmeldenummer: **23813546.1**

(22) Anmeldetag: **21.11.2023**

(51) Internationale Patentklassifikation (IPC):
**A47J 27/00** *(2006.01)* **A47J 43/046** *(2006.01)*

(52) Gemeinsame Patentklassifikation (CPC):
**A47J 43/0465; A47J 27/004**

(86) Internationale Anmeldenummer:
**PCT/AT2023/060402**

(87) Internationale Veröffentlichungsnummer:
**WO 2024/108243 (30.05.2024 Gazette 2024/22)**

(54) **FLÜSSIGKEITSERWÄRMER**

LIQUID HEATER

DISPOSITIF DE CHAUFFAGE DE LIQUIDE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Validierungsstaaten:
**MA**

(30) Priorität: **21.11.2022 AT 508742022**

(43) Veröffentlichungstag der Anmeldung:
**01.10.2025 Patentblatt 2025/40**

(73) Patentinhaber: **MAM Baby AG**
**8832 Wollerau (CH)**

(72) Erfinder:
• **WULTSCH, Georg**
**2490 Ebenfurth (AT)**

• **SZABO, Balazs**
**9400 Sopron (HU)**

(74) Vertreter: **SONN Patentanwälte GmbH & Co KG**
**Riemergasse 14**
**1010 Wien (AT)**

(56) Entgegenhaltungen:
**US-A1- 2013 081 545     US-A1- 2018 126 339**
**US-B2- 9 107 533**

• **INFOBOARD.DE: "Im Test: Severin SM 9685 Induktions-Milchaufschäumer", 30 September 2018 (2018-09-30), XP093122483, Retrieved from the Internet <URL:https://www.youtube.com/watch?v=e456xy3JByA> [retrieved on 20240122]**

**Beschreibung**

Die Erfindung betrifft einen Flüssigkeitserwärmer gemäß dem Oberbegriff von Anspruch 1 sowie ein Verfahren zum Erwärmen einer schäumbaren Flüssigkeit in einem Flüssigkeitserwärmer gemäß Anspruch 15.

Flüssigkeitserwärmer, welche eine zu erwärmende Flüssigkeit, beispielsweise Milch, während des Erwärmens auch rühren sind aus dem Stand der Technik bekannt.

Die US 9,107,533 B2 offenbart einen automatischen Milchschäumer mit einem Behälter zum Aufnehmen der Milch, einer Basis in welche der Behälter zum Erwärmen und Schäumen der Milch eingesetzt wird, einem im Behälter aufgenommenen Rotor einer Rührvorrichtung zum Schäumen der im Behälter aufgenommenen Milch und einer Heizvorrichtung zum Erwärmen der im Behälter aufgenommenen Milch. Der Rotor wird mittels einer Magnetkopplung über einen in der Basis angeordneten Motor angetriebenen. Der Behälter ist frei von elektrischen Komponenten und einer durchgehenden Antriebswelle der Rührvorrichtung.

Die US 2013/081545 A1 betrifft einen Milchschäumer mit einer Basis und einem darin einsetzbaren Edelstahlbehälter, welcher über eine Induktionsspule in einer Seitenwand der Basis beheizt wird. Die Basis weist einen mittig angeordneten, hohlen Vorsprung auf, in dem sich ein Magnetkopf dreht, der von einem in der Basis angeordneten Elektromotor angetrieben wird. Der Boden des Edelstahlbehälters weist eine zentrale, hohle Nabe auf, welche im Inneren den Vorsprung aufnimmt.

Nachteilig an den Milchschäumern gemäß der US 9,107,533 B2 und der US 2013/081545 A1 ist, dass eine Erwärmung der im Behälter aufgenommenen Milch nur unter gleichzeitigem Schäumen der Milch möglich ist.

Bei der Erwärmung von Flüssigkeiten für den nachfolgenden Verzehr durch Babies, soll aber die Bildung von Schaum und Luftblasen in der Flüssigkeit vermieden werden. Die Vermeidung von Lufteinschlüssen kann dazu beitragen, häufige Ernährungsprobleme, wie Koliken und Blähungen, zu lindern. Zudem soll die Flüssigkeit, insbesondere Milch, schonend erwärmt werden und sogenannten Hotspots, d.h. Bereiche mit Temperaturen, die die Nährstoffe, Enzyme und Antikörper in der zu erwärmenden Flüssigkeit, insbesondere in der Muttermilch, schädigen, sollen vermieden werden. Gemäß wissenschaftlicher Studien soll Muttermilch beim Erwärmen eine Maximaltemperatur von 40 °C nicht überschreiten, vgl. z.B. Bransburg-Zabary S, Virozub A, Mimouni FB, Human Milk Warming Temperatures Using a Simulation of Currently Available Storage and Warming Methods. PLoS ONE 10(6), veröffenlicht am 10. Juni 2015.

Die US 2018/126339 A1 offenbart eine Maschine zum Homogenisieren eines Lebensmittels, wie z.B. zum Aufschäumen von Milch oder einer milchhaltigen Substanz, optional mit induktiver Erwärmung des Lebensmittels. Die Maschine weist einen elektrisch passiven, zylinderförmigen Behälter, bspw. aus Edelstahl und mit flachem Boden, zur Aufnahme des Lebensmittels auf, welcher in ein Gehäuse einsetzbar ist, sowie ein magnetisch angetriebenes Laufrad.

Es ist nun Aufgabe der Erfindung einen Flüssigkeitserwärmer sowie ein Verfahren zum Erwärmen einer schäumbaren Flüssigkeit wie eingangs angegeben zu schaffen, welcher bzw. welches die Nachteile des Standes der Technik vermeidet oder zumindest verringert. Der Flüssigkeitserwärmer sowie das Verfahren sollen eine möglichst gleichmäßige Erwärmung einer darin aufgenommenen Flüssigkeit, ohne Ausbildung von überhitzen Bereichen im Flüssigkeitsvolumen und ohne Aufschäumen der Flüssigkeit ermöglichen. Zudem soll die Erwärmung der Flüssigkeit möglichst effizient erfolgen. Der Flüssigkeitserwärmer soll zudem kostengünstig herstellbar und einfach zu reinigen sein.

Diese Aufgabe wird durch einen Flüssigkeitserwärmer gemäß Anspruch 1 und ein Verfahren gemäß Anspruch 15 gelöst. Vorteilhafte Ausführungen und Weiterbildungen sind in den abhängigen Ansprüchen angegeben.

Der erfindungsgemäße Flüssigkeitserwärmer ist dadurch gekennzeichnet, dass der Rotor ausgebildet ist, in einem Betriebszustand die aufgenommene Flüssigkeit im Behälter in Drehung zu versetzen und an der Mantelfläche ansteigen zu lassen und die Drehzahl des Rotors in einem Drehzahlbereich liegt, in welchem eine dem drehenden Rotor ausgesetzte definierte minimale Menge der Flüssigkeit im Behälter eine Höhe zumindest gleich der Heizhöhe aufweist und mit welchem Drehzahlbereich die erwärmte Flüssigkeit eine Oberfläche frei von einer durchgehenden Schaumfläche aufweist, wobei im Fall einer Dichte der Flüssigkeit im Bereich von 1,018-1,048 g/cm$^3$, eine der Rührvorrichtung zugeordnete Newton-Zahl zwischen 0,1 und 0,3 beträgt.

Das erfindungsgemäße Verfahren ist dadurch gekennzeichnet, dass der Rotor in einem Betriebszustand die aufgenommene Flüssigkeit im Behälter in Drehung versetzt und an der Mantelfläche ansteigen lässt wobei die Drehzahl des Rotors in einem Drehzahlbereich liegt, in welchem der Rotor während seiner Drehung eine definierte minimale Menge der Flüssigkeit im Behälter auf eine Höhe zumindest gleich der Heizhöhe ansteigen lässt und mit welchem Drehzahlbereich nach der Drehung des Rotors eine erwärmte Flüssigkeit im Behälter erhalten wird, welche weiterhin an ihrer Oberfläche frei von einer durchgehenden Schaumfläche ist, wobei wenn eine Flüssigkeit mit einer Dichte im Bereich von 1,018-1,048 g/cm$^3$ in dem Behälter aufgenommen wird, eine der Rührvorrichtung zugeordnete Newton-Zahl zwischen 0,1 und 0,3 beträgt.

Der Flüssigkeitserwärmer dient dem Erwärmen einer Flüssigkeit, insbesondere dem Erwärmen von Milch, wie beispielsweise abgepumpter Muttermilch, aus Milchpulver hergestellter Milch oder auch tierischer Milch. Der Flüssigkeitserwärmer weist einen Behälter, welcher zum Aufnehmen der zu erwärmenden Flüssigkeit vorgesehen ist, eine Basis, auf welcher der Behälter positioniert werden kann und von welcher der Behälter wieder abgenommen werden kann, eine Heizvorrichtung, welche zum Erwärmen der Flüssigkeit im Behälter ausgebildet ist, und eine Rührvorrichtung, welche zum Rühren der Flüssigkeit im Behälter ausgebildet ist, auf. Der Behälter weist einen Boden und eine sich davon erstreckende Mantelfläche auf und kann bspw. als befüllbare und entleerbare Kanne ausgebildet sein und hierfür einen öffenbaren und wieder verschließbaren Deckel und einen Handgriff zum Erfassen durch einen Benutzer aufweisen. Beispielsweise kann die Mantelfläche zylindrisch ausgebildet sein. Vorzugsweise ist der Behälter zur Aufnahme einer maximal vorgesehenen Füllmenge der zu erwärmenden Flüssigkeit von 300 ml, bevorzugt 200 ml und besonders bevorzugt von 120 ml ausgebildet, wobei die tatsächlich aufnehmbare Flüssigkeitsmenge noch höher sein kann. Im Verwendungszustand, insbesondere zum Erwärmen der Flüssigkeit, ist der Behälter auf der Basis positioniert, welche die zum Betrieb des Flüssigkeitserwärmers erforderlichen elektrischen Komponenten aufweist. Hierfür kann die Basis ein Stromkabel zur Verbindung mit einer Steckdose oder Batterien aufweisen. Zum Entnehmen der erwärmten Flüssigkeit und zum Reinigen des Behälters kann dieser durch einen Benutzer des Flüssigkeitserwärmers von der Basis abgenommen werden.

Die Heizvorrichtung dient dem Erwärmen der Flüssigkeit im Behälter und kann eine Regeleinrichtung zum Einstellen einer gewünschten Zieltemperatur der zu erwärmenden Flüssigkeit durch einen Benutzer aufweisen. Die Mantelfläche des Behälters ist bis zu einer vom Boden ausgehenden vorgegebenen Heizhöhe Teil der Heizvorrichtung und weist zum Erwärmen der Flüssigkeit, d.h. in einem Betriebszustand des Flüssigkeitserwärmers, bis zur Heizhöhe eine Heiztemperatur auf. Somit wird die Flüssigkeit im Behälter sanft über die Mantelfläche erwärmt. Da die Mantelfläche im Allgemeinen eine größere Oberfläche als der Boden des Behälters aufweist, kann die Erwärmung der Flüssigkeit besonders effizient erfolgen. Zudem kann wegen der vergleichsweise großen Oberfläche der Mantelfläche auf besonders hohe Heiztemperaturen verzichtet werden. Beispielsweise liegt die Heiztemperatur nur bis zu 30 Grad, vorzugsweise bis zu 20 Grad über der Zieltemperatur der zu erwärmenden Flüssigkeit.

Die Rührvorrichtung weist einen im Behälter aufgenommenen, Magnetfeld erzeugende oder magnetisierbare erste Körper aufweisenden Rotor und eine in der Basis aufgenommene, Magnetfeld erzeugende oder magnetisierbare zweite Körper aufweisende Antriebseinrichtung für den Rotor auf. Als Magnetfeld erzeugende erste und zweite Körper können Dauermagnete oder mit elektrischem Strom beaufschlagbare Spulen vorgesehen sein, während magnetisierbare erste und zweite Körper metallisch, insbesondere ferromagnetisch ausgebildet sein können. Der Rotor ist im Behälter aufgenommen und wird im Betrieb des Flüssigkeitserwärmers, d.h. während des Erwärmens der Flüssigkeit im Behälter, durch die in der Basis vorgesehene Antriebseinrichtung in Rotation versetzt. Hierfür sind die ersten Körper magnetisch mit den zweiten Körpern gekoppelt. Somit ist auch der Rotor über die ersten und zweiten Körper magnetisch mit der Antriebseinrichtung gekoppelt und die Antriebseinrichtung ist zum Drehen des Rotors mit zumindest einer Drehzahl ausgebildet. Die Antriebseinrichtung weist hierfür einen Motor, insbesondere einen Elektromotor auf. Die Rotation des Rotors während des Erwärmens der Flüssigkeit im Behälter bewirkt eine möglichst gleichmäßige Verteilung der über die Heizvorrichtung eingebrachten Wärme in der Flüssigkeit, ohne dass hierbei überhitzte Bereiche im Flüssigkeitsvolumen, sog. Hotspots, entstehen. Ein Vermeiden solcher überhitzter Bereiche bzw. Hotspots wirkt sich günstig auf die Inhaltsstoffe der Flüssigkeit aus und verhindert zudem Unannehmlichkeiten bzw. Verletzungen beim Trinken der Flüssigkeit, wenn diese davor nicht sorgfältig durchgerührt wird.

Um die Flüssigkeit im Behälter effizient erwärmen und gleichzeitig Schaumbildung im Behälter möglichst vermeiden zu können, liegt die Drehzahl des Rotors in einem Drehzahlbereich, in welchem der Rotor während seiner Drehung eine definierte minimale Menge der Flüssigkeit im Behälter zumindest bis zur Heizhöhe ansteigen lässt und in welchem Drehzahlbereich nach der Drehung des Rotors die erwärmte Flüssigkeit an ihrer Oberfläche frei von einer durchgehenden Schaumfläche ist. Somit ist die Antriebseinrichtung ausgebildet den Rotor mit einer Drehzahl zu drehen, welche die durch den Rotor in Drehung versetzte Flüssigkeit zumindest bis zur Heizhöhe ansteigen lässt, eine durchgehende Schaumfläche der Flüssigkeit, bspw. von (Mutter-)Milch, an der Oberfläche der Flüssigkeit selbst am Ende der Drehung des Rotors oder nach der Drehung des Rotors jedoch vermeidet. Auf diese Weise wird selbst eine definierte minimale Menge der Flüssigkeit im Behälter effizient erwärmt, da die Flüssigkeit mit dem gesamten Teil der Mantelfläche, welcher die Heiztemperatur aufweist, in Berührung kommt. Hierfür ist die Drehzahl des Rotors zumindest so groß wie eine Untergrenze des Drehzahlbereichs. Indem die Drehzahl des Rotors zudem eine Obergrenze des Drehzahlbereichs nicht überschreitet, wird selbst für schäumbare Flüssigkeiten wie Milch eine durchgehende Schaumfläche vermieden, sodass die erwärmte Flüssigkeit sofort nach der Entnahme aus dem Behälter getrunken werden kann, ohne dabei Luft in einem an der Oberfläche der Flüssigkeit gebildeten Schaum zu schlucken. Insbesondere wenn ein Kleinkind die erwärmte Flüssigkeit trinkt, ist ein Vermeiden der Schaumbildung vorteilhaft. Einzelne Luftblasen oder mit Schaum bedeckte Teilbereiche der Oberfläche der erwärmten Flüssigkeit können jedoch nach dem Drehen des Rotors auftreten.

Jede Drehzahl innerhalb des Drehzahlbereichs ist geeignet, um die Flüssigkeit im Behälter zumindest bis zur Heizhöhe ansteigen zu lassen und eine durchgehende Schaumfläche nach dem Drehen des Rotors zu vermeiden. Dabei hängt die Drehzahl oder der Drehzahlbereich von zahlreichen konstruktionsbedingten Parametern des Flüssigkeitserwärmers ab. Die Antriebseinrichtung kann auch zur Einstellung der Drehzahl und/oder zur Einstellung des Drehzahlbereichs ausgebildet sein, um die Drehzahl oder den Drehzahlbereich an die Eigenschaften der im Behälter aufgenommenen Flüssigkeit anzupassen. Beispielsweise kann eine Tabelle oder eine im Flüssigkeitserwärmer vorprogrammierte Einstellhilfe vorgesehen sein, welche einem Benutzer günstige Drehzahlen oder einen günstigen Drehzahlbereich für verschiedene Flüssigkeiten anzeigen. Innerhalb des Drehzahlbereichs kann die Drehzahl des Rotors konstant sein.

Zudem beträgt im Fall einer Dichte der Flüssigkeit im Bereich von 1,018-1,048 g/cm³, eine der Rührvorrichtung zugeordnete Newton-Zahl zwischen 0,1 und 0,3. Die Dichte der Flüssigkeit im angegebenen Bereich entspricht im Wesentlichen jener von Milch. Bevorzugt beträgt die der Rührvorrichtung zugeordnete Newton-Zahl auch dann zwischen 0,1 und 0,3, bevorzugt zwischen 0,1 und 0,2, wenn die Oberflächenspannung und/oder die Viskosität der Flüssigkeit im Wesentlichen jener von Milch entspricht. Hierbei kann die Oberflächenspannung im Bereich von 30 bis 43,5 mN/m und die Viskosität im Bereich von 1,06386 bis 3,27726 mm²/s liegen. Die angegebenen Werte für die Dichte, die Oberflächenspannung und die Viskosität sind abhängig von der Temperatur und der Art der Flüssigkeit, insbesondere der Milch. Es ist offensichtlich, dass unterschiedlich ausgebildete Rotoren unterschiedliche Drehzahlen erfordern können, um die definierte minimale Menge der Flüssigkeit im Behälter zumindest bis zur Heizhöhe ansteigen zu lassen. Die unterschiedlichen Rotoren können jedoch auch unterschiedliche Newton-Zahlen aufweisen, da die Newton-Zahl charakteristisch für die über den Rotor eingebrachte Leistung in die Flüssigkeit ist. Somit ist die Ausbildung des Rotors über die Angabe der Newton-Zahl hinreichend festgelegt. Demnach kann der im Behälter aufgenommene Rotor eine von verschiedene Formen aufweisen. Insbesondere gibt die Newton-Zahl an, welcher Anteil der Leistung P eines Rotors tatsächlich als hydraulische Leistung zur Verfügung steht. Es gilt:

$$Ne = P / (\rho * n^3 * d^5)$$

mit:

Ne    Newton Zahl
P     Rotorleistung, W
$\rho$     Dichte der Flüssigkeit, kg/m³
n     Drehzahl, s$^{-1}$
d     Rotordurchmesser, m

Die Rotorleistung P wird aus dem Widerstandsmoment des Rotors berechnet:

$$P = M * 2 * \pi * n$$

mit:

P     Rotorleistung, W
M     Rotormoment, Nm
n     Drehzahl, s$^{-1}$

Wenn im Rahmen der Beschreibung auf Orts- oder Richtungsangaben wie oben, oberhalb, unten oder unterhalb Bezug genommen wird, so sind diese in Bezug auf eine Verwendungsposition des Flüssigkeitserwärmers zu verstehen, in welcher Flüssigkeit im Behälter erwärmt wird.

Gemäß einer bevorzugten Ausführungsform der Erfindung beträgt im Fall der Dichte der Flüssigkeit im Bereich von 1,018-1,048 g/cm³, die der Rührvorrichtung zugeordnete Newton-Zahl zwischen 0,1 und 0,2.

Besonders günstig ist es, wenn bei einer Leistung des Rotors im Bereich von 0,05 bis 0,1 W, einem Verhältnis der Heizhöhe zu einer Höhe des Rotors im Bereich von 3 bis 5 und einem Verhältnis eines in der Heizhöhe vorgesehenen Hüllenkreisdurchmessers des Behälters zu einem Hüllenkreisdurchmesser des Rotors im Bereich von 1,20 bis 1,4, die Drehzahl des Rotors im Bereich von 370 bis 450 U/min liegt. Dabei ist die Höhe des Rotors in axialer Richtung des Rotors definiert und der Hüllenkreisdurchmesser des Behälters oder des Rotors ist als der kleinste Kreisdurchmesser definiert innerhalb dessen, bei Ansicht in axialer Richtung des betriebsbereiten Flüssigkeitserwärmers, die Innenseite der Mantelfläche des Behälters oder der Rotor vollständig enthalten sind.

Um den Behälter ohne elektrische Komponenten der Heizvorrichtung ausbilden zu können, kann vorgesehen sein, dass die Heizvorrichtung eine Induktionsheizvorrichtung ist. Somit kann der Behälter, insbesondere die Mantelfläche, die bis zu der Heizhöhe Teil der Heizvorrichtung ist, von einer extern zur Mantelfläche vorgesehenen Energiequelle mittels Induktion erwärmt werden. Die Mantelfläche ist hierfür zumindest im Bereich bis zur Heizhöhe aus einem durch Induktion erwärmbaren Material ausgebildet.

Zum Erwärmen der Flüssigkeit im Behälter ist es besonders vorteilhaft, wenn die Basis einen Boden und eine davon abstehende Seitenfläche aufweist, welche neben der Mantelfläche des auf der Basis positionierten Behälters angeordnet ist und, vorzugsweise bis zur Heizhöhe, eine Magnetfeld erzeugende Einrichtung der Induktionsheizvorrichtung aufweist. Besonders vorteilhaft ist die Seitenfläche der Basis zumindest abschnittsweise um die Mantelfläche des Behälters gebogen ausgebildet. Insbesondere kann die Seitenfläche vollständig um die Mantelfläche herum umlaufend, bspw. ringförmig bzw. zylindrisch ausgebildet sein. Demnach kann der Behälter zur Erwärmung der Flüssigkeit in die Basis eingesetzt werden. Wenn die Magnetfeld erzeugende Einrichtung der Induktionsheizvorrichtung möglichst großflächig in der Seitenfläche der Basis angeordnet ist, kann die Erwärmung der Mantelfläche des Behälters und hierdurch der Flüssigkeit im Behälter besonders effizient erfolgen. Beispielsweise kann die Magnetfeld erzeugende Einrichtung mehr als den halben Flächenbereich, insbesondere mehr als drei Viertel des Flächenbereichs der Seitenfläche überspannen. Die Magnetfeld erzeugende Einrichtung kann insbesondere zumindest eine Spule sein, die ein magnetisches Wechselfeld erzeugt, wenn sie von einem Wechselstrom durchflossen wird.

Wenn auch der Boden der Basis eine Magnetfeld erzeugende Einrichtung der Induktionsheizvorrichtung aufweist, kann hierdurch auch der Boden des Behälters erwärmt werden und die Erwärmung der Flüssigkeit im Behälter noch effizienter erfolgen. In diesem Fall ist auch der Boden des Behälters aus einem durch Induktion erwärmbaren, elektrisch leitfähigen Material gebildet.

Um den Behälter möglichst einfach reinigen zu können und frei von das äußere Erscheinungsbild störenden elektrischen Kontakten zu halten, ist der Behälter bevorzugt von der Basis elektrisch isoliert. Der Behälter weist somit keine elektrische Verbindung mit der Basis auf und kann zum Reinigen in Wasser eingetaucht werden, ohne Schäden an Kontakten befürchten zu müssen. Zudem können der Boden und die Mantelfläche des Behälters dünnwandig ausgebildet sein, da diese frei von elektrischen Komponenten sind.

Für eine langlebige Konstruktion des Behälters, eine effiziente Erwärmung der Flüssigkeit und eine möglichst effiziente Vermeidung eines Aufschäumens der Flüssigkeit im Behälter kann vorgesehen sein, dass die Mantelfläche des Behälters zumindest bis zur Heizhöhe aus Metall, insbesondere aus Edelstahl, und vorzugsweise zylindrisch ausgebildet ist. Die Mantelfläche kann dennoch einen metallfreien Abschnitt, bspw. ein durchsichtiges Sichtfenster, vorzugsweise zumindest im Bereich der Heizhöhe aufweisen, um den Rührvorgang oder die Höhe der eingebrachten Flüssigkeit beobachten zu können. Edelstahl bietet zudem den Vorteil der Korrosionsbeständigkeit.

Wenn zumindest eine Unterseite des Behälterbodens eben ausgebildet ist, kann der Behälter einfach konstruiert, kostengünstig hergestellt und zuverlässig auf einem Untergrund abgestellt werden. Dabei ist unter der Unterseite des Behälterbodens die vom Innenraum des Behälters abgewandte Seite des Behälterbodens zu verstehen.

Wenn eine Oberseite des Behälterbodens eben ausgebildet ist und vorzugsweise der Rotor frei von einer kreis- oder ringförmigen Aufnahme für eine Drehwelle ist, kann die dem Innenraum des Behälters zugewandte Oberseite des Behälterbodens besonders einfach und zuverlässig gereinigt werden. Hierfür weist die Oberseite des Behälterbodens keine bspw. zylinder- oder zapfenförmigen Erhöhungen als Drehachse für den Rotor auf. Zudem kann der Rotor vor der Inbetriebnahme des Flüssigkeitserwärmers unkompliziert in den Behälter eingelegt werden, ohne exakt über oder auf einer Drehachse positioniert werden zu müssen. Dies ist insbesondere vorteilhaft, wenn der Behälter einen im Vergleich zu seiner Höhe geringen Durchmesser aufweist, wodurch es für einen Benutzer schwierig ist, seine Hand in den Behälter tief genug einzubringen, um den Rotor genau auf einer Drehachse zu positionieren. Günstigerweise ist auch der Rotor frei von einer kreis- oder ringförmigen Aufnahme bzw. Aussparung, insbesondere einer zylindrischen Aufnahme bzw. Aussparung, für eine Drehwelle. Somit kann auch der Rotor einfach und sorgfältig gereinigt werden, da er keine Aufnahme oder Aussparung für eine Drehwelle aufweist, in welcher sich Reste der erwärmten Flüssigkeit ablagern könnten.

Um den Behälter unabhängig von der Antriebseinrichtung konstruieren zu können, ist es von Vorteil, wenn die zweiten Körper der Antriebseinrichtung unterhalb des Bodens des auf der Basis positionierten Behälters angeordnet sind. Demgegenüber ist der Rotor oberhalb des Bodens bzw. auf dem Boden des auf der Basis positionierten Behälters angeordnet. Da die Magnetkopplung zwischen den zweiten Körpern der Antriebseinrichtung und den ersten Körpern des Rotors und damit die Kraftübertragung von der Antriebseinrichtung auf den Rotor durch den Boden des Behälters hindurch erfolgt, ist der Behälterboden für eine effiziente Kraftübertragung vorteilhafter Weise dünnwandig ausgebildet. Beispielsweise beträgt die Dicke des Behälterbodens höchstens 3mm, bevorzugt höchstens 2mm.

Besonders vorteilhaft ist es, wenn der Rotor in einem mit der Antriebseinrichtung gekoppelten Zustand durch die zweiten Körper der Antriebseinrichtung magnetisch zentriert ist. Auf diese Weise kann auf eine mechanische Drehachse für den Rotor verzichtet werden. Die Zentrierung des Rotors, d.h. die zum Rühren der Flüssigkeit im Behälter günstige oder erforderliche Position des Rotors, wird durch die magnetische Anziehungskraft zwischen den ersten und zweiten Körpern erzielt. Besonders günstig ist der Abstand zwischen den zweiten Körpern der Antriebseinrichtung und der Abstand zwischen den ersten Körpern des Rotors möglichst groß und beträgt bspw. zumindest die Hälfte, bevorzugt zumindest zwei Drittel des Hüllkreisdurchmessers des Rotors, um über die Magnetkopplung ein möglichst hohes Drehmoment von der Antriebseinrichtung auf den Rotor übertragen zu können. Zudem kann als Folge des großen Abstands der Rotor auch dann zuverlässig zentriert werden, wenn der Rotor durch einen Benutzer außerhalb der Mitte des Behälterbodens, bspw. unter Berührung der Mantelfläche, in den Behälter eingelegt wurde.

Um eine zuverlässige Magnetkopplung zwischen dem Rotor und der Antriebseinrichtung zu erzielen, ist bevorzugt eine Erstreckung zumindest eines der ersten und zweiten Körper in einer Ebene parallel zum Boden des auf der Basis positionierten Behälters größer als eine Erstreckung des zumindest einen der ersten und zweiten Körper in einer Ebene senkrecht zum Boden des auf der Basis positionierten Behälters. Bevorzugt erstreckt sich zumindest einer der ersten und zweiten Körper in der Ebene parallel zum Boden des auf der Basis positionierten Behälters um zumindest 10%, bevorzugter zumindest 20%, besonders bevorzugt zumindest 30% des Hüllkreisdurchmessers des Rotors.

Für eine einfache Handhabung des Flüssigkeitserwärmers kann vorgesehen sein, dass der Rotor aus dem Behälter werkzeuglos entnehmbar ist und insbesondere in radialer Richtung frei beweglich ist. Somit kann der Rotor, bspw. zum Reinigen des Rotors und des Behälters, durch Umdrehen des von der Basis abgenommenen Behälters in eine mit dem Behälterboden nach oben weisende Position, aus dem Behälter herausfallen. Die Entnahme des Rotors wird noch dadurch begünstigt, dass gemäß dieser Ausführungsform der Rotor des von der Basis abgenommenen Behälters in radialer Richtung frei beweglich, d.h. frei von einer mechanischen Führung ist.

Gemäß einer weiteren Ausführungsform kann vorgesehen sein, dass der Rotor zumindest zwei, vorzugsweise drei, sich in einer radialen Richtung des Rotors erstreckende Arme aufweist, an welchen die ersten Körper angeordnet sind. Die von einem Mittelpunkt bzw. Schwerpunkt des Rotors vorspringenden Arme dienen dem Rühren der Flüssigkeit. Zudem ermöglicht die Anordnung der ersten Körper an den Armen, insbesondere in einer radial äußeren Hälfte oder einem radial äußeren Drittel der Arme, eine effiziente Übertragung des Drehmoments von der Antriebseinrichtung auf den Rotor. Beispielsweise verlaufen die Arme des in den Behälter eingesetzten Rotors zumindest teilweise in einer Ebene parallel zum Boden des Behälters. Günstig ist zudem, wenn eine Längserstreckung der Arme in radialer Richtung des Rotors größer als eine Höhenerstreckung der Arme in axialer Richtung des Rotors ist.

Für ein effizientes Rühren der Flüssigkeit und eine möglichst verlustfreie Übertragung des Drehmoments von der Antriebseinrichtung auf den Rotor ist es günstig, wenn der Rotor drei in einer Rotorebene, vorzugsweise in Drehrichtung gekrümmte Arme aufweist und vorzugsweise eine in axialer Richtung vorspringende Erhöhung als Lagerfläche auf der dem Behälterboden zugewandten Seite aufweist. Dabei verläuft die Rotorebene senkrecht zu einer virtuellen Drehachse des Rotors, d.h. senkrecht zur axialen Richtung des Rotors. Die Krümmung der Arme in Drehrichtung begünstigt das Rühren der Flüssigkeit. Die als Lagerfläche dienende, in axialer Richtung des Rotors vorspringende Erhöhung reduziert vorteilhaft den Reibungswiderstand des im Behälter aufgenommenen Rotors am Behälterboden. Beispielsweise kann die in axialer Richtung vorspringende Erhöhung des Rotors eine in Richtung zum Behälterboden weisende Wölbung oder ein Zapfen sein.

Die Erfindung wird nachstehend anhand von bevorzugten Ausführungsbeispielen, auf welche sie jedoch nicht beschränkt sein soll, noch weiter erläutert. In den Zeichnungen zeigen:

Fig. 1 einen Flüssigkeitserwärmer gemäß der Erfindung, mit einem Deckel, in einer perspektivischen Ansicht;

Fig. 2 den Flüssigkeitserwärmer aus Fig. 1 ohne den Deckel;

Fig. 3 eine Ansicht von oben auf und teilweise in den Flüssigkeitserwärmer aus Fig. 2;

Fig. 4 eine Schnittansicht des Flüssigkeitserwärmers aus Fig. 1;

Fig. 5 eine weitere Schnittansicht des Flüssigkeitserwärmers aus Fig. 1, entsprechend einem im Vergleich zu Fig. 4 um 90° gedrehten Schnitt;

Fig. 6a bis 6d Ansichten eines Rotors des Flüssigkeitserwärmers aus Fig. 1;

Fig. 7 ein Diagramm der Rotorleistung als Funktion der Zeit; und

Fig. 8 ein Diagramm der Newton-Zahl als Funktion der Zeit.

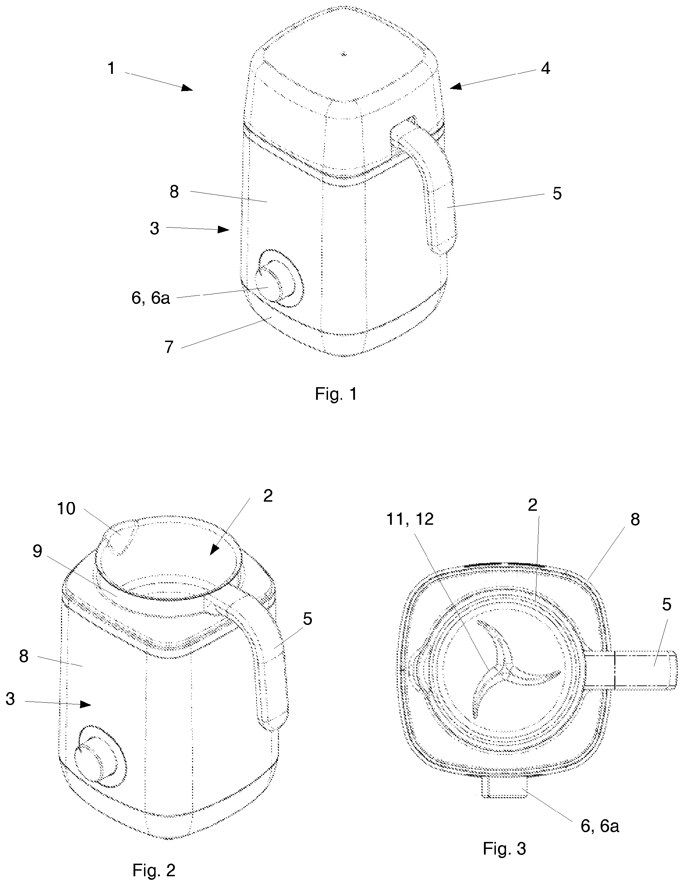

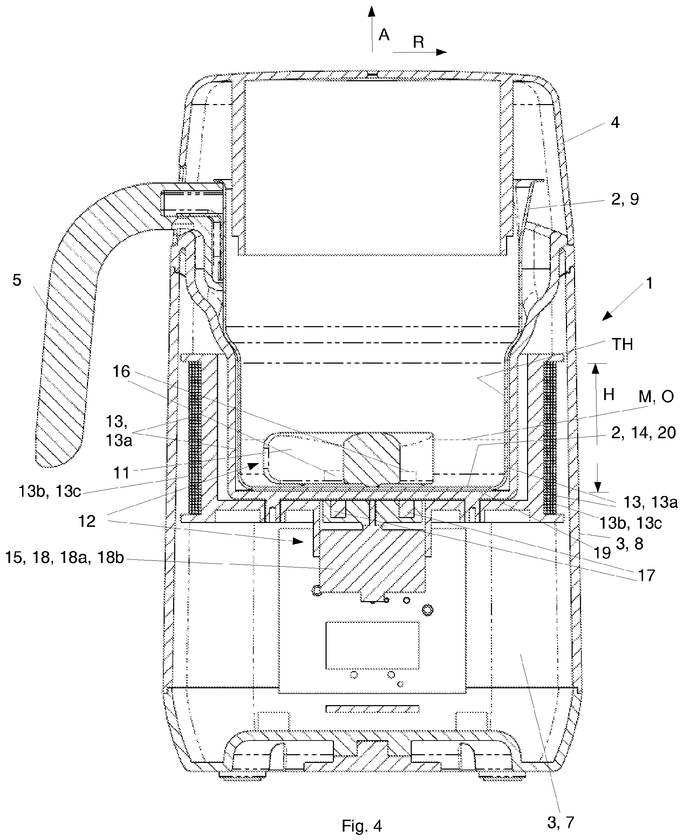

Fig. 1 zeigt einen Flüssigkeitserwärmer 1 gemäß der Erfindung, mit einem in Fig. 1 nicht erkennbaren Behälter 2, zum Aufnehmen einer nicht dargestellten zu erwärmenden Flüssigkeit, einer Basis 3, auf bzw. in welcher der Behälter 2 gemäß einer Verwendungsposition positioniert ist, einem abnehmbaren oder andersartig öffenbaren Deckel 4, zum Abdecken bzw. Verschließen des Behälters 2, und einem Handgriff 5 zum einfachen Erfassen des Flüssigkeitserwärmers 1 durch einen nicht dargestellten Benutzer. Zudem ist ein Bedienelement 6 in Form eines elektrischen Einschaltknopfs 6a erkennbar. Die Basis 3 weist einen Boden 7 und eine davon nach oben, in Richtung des Deckels 4 abstehende Seitenfläche 8 auf, welche einen Großteil des Behälters 2 umgibt. Der Boden 7 der Basis 3 kann durchaus einen Hohlraum mit darin aufgenommenen Komponenten des Flüssigkeitserwärmers 1 aufweisen, vgl. z.B. Fig. 4. Im Fig. 1 dargestellten Beispiel ist der Behälter 2 vollständig von der Basis 3 und dem Deckel 4 eingeschlossen. In einer anderen nicht dargestellten Ausführungsform kann der Behälter 2 nur teilweise von der Basis 3 und dem Deckel 4 umgeben bzw. bedeckt sein.

Fig. 2 zeigt den Flüssigkeitserwärmer 1 aus Fig. 1 ohne den Deckel 4, wodurch der Behälter 2, insbesondere die Mantelfläche 9 des Behälters 2, ersichtlich ist. Im dargestellten Beispiel weist der Behälter 2 zudem den Handgriff 5 und einen Ausguss 10 auf und ist zumindest abschnittsweise zylindrisch ausgebildet. Vorzugsweise ist die Mantelfläche 9 des Behälters 2 zumindest abschnittsweise zylindrisch ausgebildet.

Fig. 3 zeigt den Flüssigkeitserwärmer 1 aus Fig. 2 in einer Ansicht von oben, in den Behälter 2 hinein. Deutlich erkennbar sind der auf die Basis 3 aufgesetzte oder in die Basis 3 eingesetzte Behälter 2 und ein im Behälter 2 aufgenommener Rotor 11 einer Rührvorrichtung 12, zum Rühren einer Flüssigkeit im Behälter 2. Der Rotor 11 kann bspw. aus Kunststoff, insbesondere aus Polypropylen hergestellt sein.

Fig. 4 zeigt eine vertikale Schnittansicht des Flüssigkeitserwärmers aus Fig. 1. Deutlich erkennbar sind der Behälter 2, die Basis 3, eine Heizvorrichtung 13 zum Erwärmen der Flüssigkeit im Behälter 2 und die Rührvorrichtung 12. Der Behälter 2 weist einen Boden 14 und die sich vom Boden 14 erstreckende Mantelfläche 9 auf. Die Mantelfläche 9 ist bis zu einer vom Behälterboden 14 ausgehenden vorgegebenen Heizhöhe H der Mantelfläche 9 Teil der Heizvorrichtung 13 und weist zum Erwärmen der Flüssigkeit bis zur Heizhöhe H eine Heiztemperatur TH auf. Die Rührvorrichtung 12 weist den im Behälter 2 aufgenommenen Rotor 11 und eine in der Basis 3 aufgenommene Antriebseinrichtung 15 für den Rotor 11 auf, wobei der Rotor 11 Magnetfeld erzeugende oder magnetisierbare erste Körper 16 aufweist und die Antriebseinrichtung 15 Magnetfeld erzeugende oder magnetisierbare zweite Körper 17 aufweist. Die Antriebseinrichtung 15 ist zum Drehen des Rotors 11 mit zumindest einer Drehzahl ausgebildet, wofür die ersten Körper 16 magnetisch mit den zweiten Körpern 17 gekoppelt sind und die Antriebseinrichtung 15 einen Antrieb 18, insbesondere einen mit einer definierten Drehzahl betreibbaren Motor 18a, besonders bevorzugt einen Elektromotor 18b, aufweist. Die Drehzahl des Rotors 11 liegt in einem Drehzahlbereich, in welchem der Rotor 11 während seiner Drehung eine definierte minimale Menge M der Flüssigkeit im Behälter 2 zumindest bis zur Heizhöhe H ansteigen lässt und in welchem Drehzahlbereich nach der Drehung des Rotors 11 die erwärmte Flüssigkeit an ihrer Oberfläche O frei von einer durchgehenden Schaumfläche ist. In Fig. 4 ist die minimale Menge M der Flüssigkeit im Behälter 2 symbolisch durch die Oberfläche O der Flüssigkeit dargestellt. In der dargestellten Ausführungsform ist die Heizvorrichtung 13 eine Induktionsheizvorrichtung 13a. In Fig. 4 ist zudem erkennbar, dass die vom Boden 7 der Basis 3 nach oben abstehende Seitenfläche 8 der Basis 3 neben der Mantelfläche 9 des auf der Basis 3 positionierten Behälters 2 angeordnet ist und, vorzugsweise bis zur Heizhöhe H, eine Magnetfeld erzeugende Einrichtung 13b der Induktionsheizvorrichtung 13a aufweist. Die Seitenfläche 8 der Basis 3 kann auch als Seitenwand mit durchaus variierender Wandstärke verstanden werden, um die Magnetfeld erzeugende Einrichtung 13b der Induktionsheizvorrichtung 13a aufzunehmen. Die ein Magnetfeld erzeugende Einrichtung 13b der Induktionsheizvorrichtung 13a kann beispielsweise zumindest eine Spule 13c sein, die mit einer nicht dargestellten Wechselstromquelle verbunden ist und im Betrieb des Flüssigkeitserwärmers 1 ein magnetisches Wechselfeld erzeugt. Dieses magnetische Wechselfeld erwärmt die Mantelfläche 9 des Behälters 2 und somit die Flüssigkeit im Behälter 2. Hierfür ist die Mantelfläche 9 des Behälters 2 zumindest bis zur Heizhöhe H günstiger Weise aus Metall, insbesondere aus Edelstahl ausgebildet. Zudem kann der Boden 7 der Basis 3 eine ein weiteres Magnetfeld erzeugende Einrichtung 13b der Induktionsheizvorrichtung 13a aufweisen. Dies ist in Fig. 4 symbolisch durch die Verlängerung der Magnetfeld erzeugenden Einrichtung 13b bis unterhalb des Rotors 11 dargestellt. Selbstverständlich kann sich die das weitere Magnetfeld erzeugende Einrichtung 13b auch unterhalb des Behälterbodens 14 erstrecken.

Fig. 4 zeigt zudem, dass der Behälter 2 von der Basis 3 elektrisch isoliert ist, d.h. es existiert zwischen dem Behälter 2 und der Basis 3 keine elektrische Verbindung. Insbesondere ist der Behälter 2 frei von im Betrieb des Flüssigkeitserwärmers 1 Strom führenden Komponenten.

Weiters ist im Beispiel gemäß Fig. 4 erkennbar, dass zumindest eine Unterseite 19 des Behälterbodens 14 eben ausgebildet ist. Ebenso kann eine Oberseite 20 des Behälterbodens 14 eben ausgebildet sein. Die eben ausgebildete Unterseite 19 und/oder Oberseite 20 erlaubt eine geringfügige, insbesondere herstellungsbedingte Welligkeit, ist jedoch frei von Erhebungen oder Vertiefungen deren Abmessungen in axialer Richtung A des Flüssigkeitserwärmers 1 größer als die Dicke des Behälterbodens 14 sind.

Im in Fig. 4 dargestellten Beispiel sind die zweiten Körper 17 der Antriebseinrichtung 12 unterhalb des Bodens 14 des auf der Basis 3 positionierten Behälters 2 angeordnet. Somit benötigt der Behälterboden 14 keine Vertiefungen oder Ausnehmungen zur Aufnahme der zweiten Körper 17. Der Rotor 11 ist in den Behälter 2 eingelegt und in einem mit der Antriebseinrichtung 12 magnetisch gekoppelten Zustand durch die ersten Körper 16 des Rotors 11 und die zweiten Körper 17 der Antriebseinrichtung 12 magnetisch zentriert. Insbesondere ist der Rotor 11 gemäß dem in Fig. 4 dargestellten Beispiel aus dem Behälter 2 werkzeuglos entnehmbar und in radialer Richtung R frei beweglich.

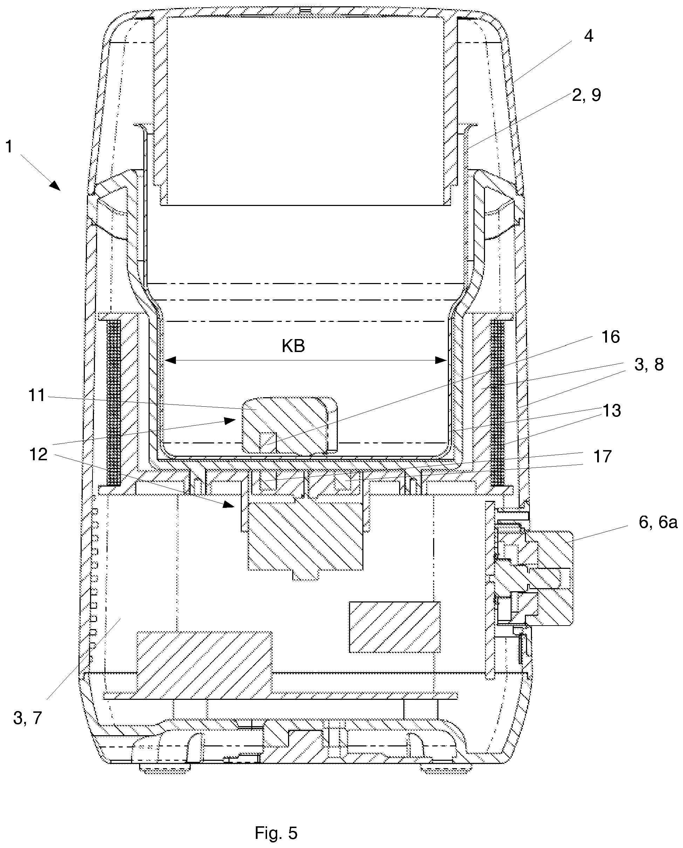

Fig. 5 zeigt eine weitere Schnittansicht des Flüssigkeitserwärmers aus Fig. 1, erzeugt durch eine im Vergleich zu Fig. 4 um 90° gedrehte Schnittebene. In Fig. 5 ist zudem ein Hüllenkreisdurchmesser KB des Behälters 2 dargestellt, welcher an der Innenseite der Mantelfläche 9 gemessen wird.

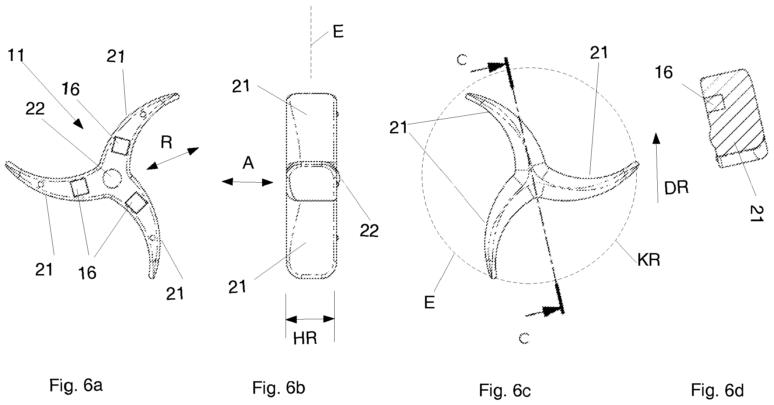

Die Fig. 6a bis 6d zeigen einen beispielhaften Rotor 11, welcher zumindest zwei, im dargestellten Beispiel drei, sich in einer radialen Richtung R des Rotors 11 erstreckende Arme 21 aufweist, an welchen die ersten Körper 16 angeordnet sind. Dabei zeigt Fig. 6a eine Unterseite des Rotors 11, welche im Betriebszustand des Flüssigkeitserwärmers 1 dem Behälterboden 14 zugewandt ist. Fig. 6b zeigt den Rotor 11 in einer Seitenansicht, Fig. 6c zeigt eine Oberseite des Rotors 11, welche im Betriebszustand des Flüssigkeitserwärmers 1 vom Behälterboden 14 abgewandt ist, und Fig. 6d zeigt eine Schnittansicht durch den Rotor 11 entlang der Linie C-C. Der Rotor 11 weist eine Höhe HR und einen Durchmesser (Hüllenkreisdurchmesser KR) auf.

Im in Fig. 6a bis 6c dargestellten Beispiel ist zudem erkennbar, dass der Rotor 11 frei von einer kreis- oder ringförmigen Aufnahme oder einer sonstigen Vertiefung für eine Drehwelle ist. Weiters ist erkennbar, dass der Rotor 11 drei in einer Rotorebene E, im dargestellten Beispiel in Drehrichtung DR gekrümmte Arme 21 aufweist und eine in axialer Richtung A vorspringende Erhöhung 22 als Lagerfläche auf der dem Behälterboden 14 zugewandten Seite, insbesondere in der Mitte des Rotors 11, aufweist.

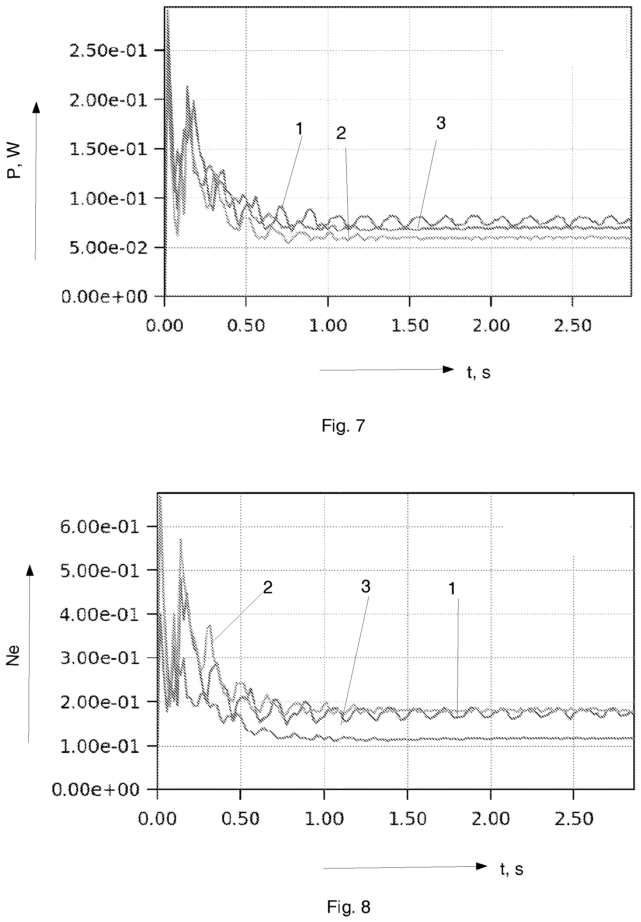

Fig. 7 zeigt ein Diagramm der Rotorleistung P (in Watt) als Funktion der Zeit t (in Sekunden) für drei verschiedene Rotor-Drehzahl-Kombinationen.

Kombination 1: Rotorhöhe HR = 16,5 mm, Rotordurchmesser KR = 70 mm, Drehzahl = 380 U/min
Kombination 2: Rotorhöhe HR = 16,5 mm, Rotordurchmesser KR = 65 mm, Drehzahl = 390 U/min
Kombination 3: Rotorhöhe HR = 10,73 mm, Rotordurchmesser KR = 70 mm, Drehzahl = 420 U/min

Fig. 8 zeigt ein Diagramm der Newton-Zahl Ne als Funktion der Zeit t (in Sekunden) für die drei Rotor-Drehzahl-Kombinationen aus Fig. 7.

Mit dem beschriebenen Flüssigkeitserwärmer 1 wurden Versuche durchgeführt, um Rotorabmessungen und zugehörige Drehzahlbereiche zu untersuchen, mit welchen der Rotor 11 während seiner Drehung eine definierte minimale Menge der Flüssigkeit im Behälter 2 zumindest bis zur Heizhöhe H ansteigen lässt, wobei nach der Drehung des Rotors 11 die erwärmte Flüssigkeit an ihrer Oberfläche frei von einer durchgehenden Schaumfläche ist.

Die nachfolgenden Tabellen 1 und 2 enthalten einige Versuchsergebnisse.

Tabelle 1

| Rotor Nr. | 1 | 2 | 3 | 4 | 5 | 6 |
|---|---|---|---|---|---|---|
| Rotorhöhe (mm) | 16,5 | 16,5 | 16,5 | 16,5 | 16,5 | 8 |
| Rotordurchmesser (mm) | 70 | 70 | 40 | 50 | 60 | 70 |
| Min. Drehzahl für 60ml Flüssigkeit, Heizhöhe benetzt (U/min) | 380 | 380 | >1100 | 870 | 600 | 505 |
| Min. Drehzahl für 100ml Flüssigkeit, Heizhöhe benetzt (U/min) | 295 | 295 | >1100 | 1100 | 470 | 300 |
| Max. Drehzahl schaumfreie Oberfäche (U/ min) | 390-420 | 380-410 | 510-650 | 470-560 | 420-460 | 320-380 |

Tabelle 2

| Rotor Nr. | 7 | 8 | 9 | 10 | 11 |
|---|---|---|---|---|---|
| Rotorhöhe (mm) | 32 | 16,5 | 14,03 | 12,38 | 10,73 |
| Rotordurchmesser (mm) | 70 | 65 | 70 | 70 | 70 |
| Min. Drehzahl für 60ml Flüssigkeit, Heizhöhe benetzt (U/min) | 325 | 390 | 370 | 380 | 420 |
| Min. Drehzahl für 100ml Flüssigkeit, Heizhöhe benetzt (U/min) | 200 | k.A. | k.A. | k.A. | k.A. |
| Max. Drehzahl schaumfreie Oberfäche (U/ min) | 360-380 | 380-410 | 400-420 | 400-420 | 410-430 |

Die Versuche zeigen, dass die Rotoren 11 mit den Nummern 1, 2 und 7 besonders geeignet sind, die gesetzten Ziele zu erreichen. Auch die Rotoren 11 mit den Nummern 8 bis 11 sind zumindest bedingt geeignet. Insbesondere kann mit diesen Rotoren 11, mit der angegebenen minimalen Drehzahl, die Mantelfläche 9 bis zur Heizhöhe H mit Flüssigkeit benetzt werden, wenn 60 ml oder 100 ml als definierte minimale Menge Flüssigkeit im Behälter 2 aufgenommen sind, während zudem bis zu der angegebenen maximalen Drehzahl die erwärmte Flüssigkeit am Ende des Rührvorgangs an ihrer Oberfläche frei von einer durchgehenden Schaumfläche ist. Als zu erwärmende Flüssigkeit wurde Milch bei 7°C verwendet.

Der Flüssigkeitserwärmer 1 kann bspw. mit folgenden Kennwerten konstruiert und betrieben werden:

Innendurchmesser des Behälters: 84,7mm

Heizhöhe: ca. 50mm
Höhe des Rotors: 10,725mm
Verhältnis der Heizhöhe zur Höhe des Rotors: 4.662
Durchmesser des Rotors: 65mm
Verhältnis des Innendurchmessers des Behälters zum Durchmesser des Rotors: 1,303
Maximale Drehzahl ohne Schäumen der Flüssigkeit (60ml Milch): ca. 450 U/min (Abhängig von der Form des Rotors)
Minimale Leistung des Rotors: P = 0.05 W
Newton Zahl : Ne = 0,1

Eine geringere Höhe HR oder ein geringerer Durchmesser KR des Rotors 11 würde eine höhere Drehzahl erfordern, um die Flüssigkeit an der Mantelfläche 9 durch den drehenden Rotor 11 bis zur Heizhöhe H ansteigen zu lassen, durch welche Drehzahl jedoch Schaumbildung an der Oberfläche der Flüssigkeit entstehen könnte.

## Patentansprüche

1. Flüssigkeitserwärmer (1) mit einem Behälter (2), zum Aufnehmen einer zu erwärmenden Flüssigkeit, einer Basis (3), auf welcher der Behälter (2) positioniert ist, einer Heizvorrichtung (13) zum Erwärmen der Flüssigkeit im Behälter (2) und einer Rührvorrichtung (12) zum Rühren der Flüssigkeit im Behälter (2), welcher Behälter (2) einen Boden (14) und eine sich davon erstreckende Mantelfläche (9) aufweist, die bis zu einer vom Boden (14) ausgehenden vorgegebenen Heizhöhe (H) der Mantelfläche (9) Teil der Heizvorrichtung (13) ist und zum Erwärmen der Flüssigkeit bis zur Heizhöhe (H) eine Heiztemperatur (TH) aufweist, und welche Rührvorrichtung (12) einen im Behälter (2) aufgenommenen, Magnetfeld erzeugende oder magnetisierbare erste Körper (16) aufweisenden Rotor (11) und eine in der Basis (3) aufgenommene, Magnetfeld erzeugende oder magnetisierbare zweite Körper (17) aufweisende Antriebseinrichtung (15) für den Rotor (11) aufweist, welche Antriebseinrichtung (15) zum Drehen des Rotors (11) mit zumindest einer Drehzahl ausgebildet ist, wofür die ersten Körper (16) magnetisch mit den zweiten Körpern (17) gekoppelt sind, wobei der Rotor (11) ausgebildet ist, in einem Betriebszustand die aufgenommene Flüssigkeit im Behälter (2) in Drehung zu versetzen und an der Mantelfläche (9) ansteigen zu lassen, **dadurch gekennzeichnet, dass** die Drehzahl des Rotors (11) in einem Drehzahlbereich liegt, in welchem eine dem drehenden Rotor (11) ausgesetzte definierte minimale Menge der Flüssigkeit im Behälter (2) eine Höhe zumindest gleich der Heizhöhe (H) aufweist und mit welchem Drehzahlbereich die erwärmte Flüssigkeit eine Oberfläche frei von einer durchgehenden Schaumfläche aufweist, wobei im Fall einer Dichte der Flüssigkeit im Bereich von 1,018-1,048 g/cm$^3$, eine der Rührvorrichtung (12) zugeordnete Newton-Zahl zwischen 0,1 und 0,3 beträgt.

2. Flüssigkeitserwärmer (1) nach Anspruch 1, **dadurch gekennzeichnet, dass** im Fall der Dichte der Flüssigkeit im Bereich von 1,018-1,048 g/cm$^3$, die der Rührvorrichtung (12) zugeordnete Newton-Zahl zwischen 0,1 und 0,2 beträgt.

3. Flüssigkeitserwärmer (1) nach Anspruch 1 oder 2, **dadurch gekennzeichnet, dass** bei einer Leistung des Rotors (11) im Bereich von 0,05 bis 0,1 W, einem Verhältnis der Heizhöhe (H) zu einer Höhe des Rotors (HR) im Bereich von 3 bis 5 und einem Verhältnis eines in der Heizhöhe (H) vorgesehenen Hüllenkreisdurchmessers (KB) des Behälters (2) zu einem Hüllenkreisdurchmesser (KR) des Rotors (11) im Bereich von 1,20 bis 1,4, die Drehzahl des Rotors (11) im Bereich von 370 bis 450 U/min liegt.

4. Flüssigkeitserwärmer (1) nach einem der Ansprüche 1 bis 3, **dadurch gekennzeichnet, dass** die Heizvorrichtung (13) eine Induktionsheizvorrichtung (13a) ist.

5. Flüssigkeitserwärmer (1) nach Anspruch 4, **dadurch gekennzeichnet, dass** die Basis (3) einen Boden (7) und eine davon abstehende Seitenfläche (8) aufweist, welche neben der Mantelfläche (9) des auf der Basis (3) positionierten Behälters (2) angeordnet ist und, vorzugsweise bis zur Heizhöhe (H), eine Magnetfeld erzeugende Einrichtung der Induktionsheizvorrichtung (13a) aufweist, und vorzugsweise auch der Boden (7) der Basis eine Magnetfeld erzeugende Einrichtung der Induktionsheizvorrichtung (13a) aufweist.

6. Flüssigkeitserwärmer (1) nach einem der Ansprüche 1 bis 5, **dadurch gekennzeichnet, dass** der Behälter (2) von der Basis (3) elektrisch isoliert ist.

7. Flüssigkeitserwärmer (1) nach einem der Ansprüche 1 bis 6, **dadurch gekennzeichnet, dass** die Mantelfläche (9) des Behälters (2) zumindest bis zur Heizhöhe (H) aus Metall, insbesondere aus Edelstahl, und vorzugsweise zylindrisch ausgebildet ist.

8. Flüssigkeitserwärmer (1) nach einem der Ansprüche 1 bis 7, **dadurch gekennzeichnet, dass** zumindest eine Unterseite (19) des Behälterbodens (14) eben ausgebildet ist.

9. Flüssigkeitserwärmer (1) nach einem der Ansprüche 1 bis 8, **dadurch gekennzeichnet, dass** eine Oberseite (20) des Behälterbodens (14) eben ausgebildet ist und vorzugsweise der Rotor (11) frei von einer kreis- oder ringförmigen Aufnahme für eine Drehwelle ist.

10. Flüssigkeitserwärmer (1) nach einem der Ansprüche 1 bis 9, **dadurch gekennzeichnet, dass** die zweiten Körper (17) der Antriebseinrichtung (15) unterhalb des Bodens (14) des auf der Basis positionierten Behälters (2) angeordnet sind.

11. Flüssigkeitserwärmer (1) nach einem der Ansprüche 1 bis 10, **dadurch gekennzeichnet, dass** der Rotor (11) in einem mit der Antriebseinrichtung (15) gekoppelten Zustand durch die zweiten Körper (17) der Antriebseinrichtung (15) magnetisch zentriert ist.

12. Flüssigkeitserwärmer (1) nach einem der Ansprüche 1 bis 11, **dadurch gekennzeichnet, dass** der Rotor (11) aus dem Behälter (2) werkzeuglos entnehmbar ist und insbesondere in radialer Richtung (R) beweglich ist.

13. Flüssigkeitserwärmer (1) nach einem der Ansprüche 1 bis 12, **dadurch gekennzeichnet, dass** der Rotor (11) zumindest zwei, vorzugsweise drei, sich in einer radialen Richtung (R) des Rotors (11) erstreckende Arme (21) aufweist, an welchen die ersten Körper (16) angeordnet sind.

14. Flüssigkeitserwärmer (1) nach einem der Ansprüche 1 bis 13, **dadurch gekennzeichnet, dass** der Rotor (11) drei in einer Rotorebene (E), vorzugsweise in Drehrichtung (DR) gekrümmte Arme (21) aufweist und vorzugsweise eine in axialer Richtung (A) vorspringende Erhöhung (22) als Lagerfläche auf der dem Behälterboden (14) zugewandten Seite aufweist.

15. Verfahren zum Erwärmen einer schäumbaren Flüssigkeit in einem Flüssigkeitserwärmer (1), wobei die zu erwärmende Flüssigkeit frei von einer durchgehenden Schaumfläche an ihrer Oberfläche in einem Behälter (2) aufgenommen wird, der Behälter (2) auf einer Basis (3) positioniert wird, die Flüssigkeit im Behälter (2) mit einer Heizvorrichtung (13) erwärmt wird und die Flüssigkeit im Behälter (2) mit einer Rührvorrichtung (12) gerührt wird, welcher Behälter (2) einen Boden (14) und eine sich davon erstreckende Mantelfläche (9) aufweist, die bis zu einer vom Boden (14) ausgehenden vorgegebenen Heizhöhe (H) der Mantelfläche (9) Teil der Heizvorrichtung (13) ist und zum Erwärmen der Flüssigkeit bis zur Heizhöhe (H) auf eine Heiztemperatur (TH) erwärmt wird, und welche Rührvorrichtung (12) einen im Behälter (2) aufgenommenen, Magnetfeld erzeugende oder magnetisierbare erste Körper (16) aufweisenden Rotor (11) und eine in der Basis (3) aufgenommene, Magnetfeld erzeugende oder magnetisierbare zweite Körper (17) aufweisende Antriebseinrichtung (15) für den Rotor (11) aufweist, welche Antriebseinrichtung (15) den Rotor (11) mit zumindest einer Drehzahl dreht, wofür die ersten Körper (16) magnetisch mit den zweiten Körpern (17) gekoppelt sind, wobei der Rotor (11) in einem Betriebszustand die aufgenommene Flüssigkeit im Behälter (2) in Drehung versetzt und an der Mantelfläche (9) ansteigen lässt, **dadurch gekennzeichnet, dass** die Drehzahl des Rotors (11) in einem Drehzahlbereich liegt, in welchem der Rotor (11) während seiner Drehung eine definierte minimale Menge der Flüssigkeit im Behälter (2) auf eine Höhe zumindest gleich der Heizhöhe (H) ansteigen lässt und mit welchem Drehzahlbereich nach der Drehung des Rotors (11) eine erwärmte Flüssigkeit im Behälter (2) erhalten wird, welche weiterhin an ihrer Oberfläche frei von einer durchgehenden Schaumfläche ist, wobei wenn eine Flüssigkeit mit einer Dichte im Bereich von 1,018-1,048 $g/cm^3$ in dem Behälter (2) aufgenommen wird, eine der Rührvorrichtung (12) zugeordnete Newton-Zahl zwischen 0,1 und 0,3 beträgt.

## Claims

1. Liquid heater (1) with a container (2) for receiving a liquid to be heated, a base (3) on which the container (2) is positioned, a heating device (13) for heating the liquid in the container (2) and a stirring device (12) for stirring the liquid in the container (2), the container (2) comprising a bottom (14) and a lateral surface (9) extending from the bottom (14), the lateral surface (9) being part of the heating device (13) up to a predetermined heating level (H) of the lateral surface (9), the heating level (H) starting from the bottom (14), and the lateral surface (9) comprising a heating temperature (TH) up to the heating level (H) for heating the liquid, and the stirring device (12) comprising a rotor (11) that is received in the container (2) and comprises magnetic field-generating or magnetisable first bodies (16), and a drive mechanism (15) for the rotor (11), the drive mechanism (15) being received in the base (3) and comprising magnetic field-generating or magnetisable second bodies (17), the drive mechanism (15) being designed to rotate the rotor (11) at least at one speed, for which the first bodies (16) are magnetically coupled to the second bodies (17), wherein the rotor (11) is designed to set the received liquid in the container (2) in rotation in an operating state and to allow it to rise up the lateral surface (9), **characterised in that** the rotational speed of the rotor (11) lies in a rotational speed range in which a defined minimum amount of the liquid in the container (2) exposed to the rotating rotor (11) comprises a height at least equal to the heating level (H) and with which rotational speed range the heated liquid comprises a surface free of a continuous foam surface, wherein in the case of a density of the liquid in the range of 1.018-1.048 g/cm3, a Newton number assigned to the stirring device (12) is between 0.1 and 0.3.

2. Liquid heater (1) according to claim 1, **characterised in that**, in the case of the density of the liquid in the range of 1.018-1.048 g/cm$^3$, the Newton number assigned to the stirring device (12) is between 0.1 and 0.2.

3. Liquid heater (1) according to claim 1 or 2, **characterised in that**, with a power of the rotor (11) in the range from 0.05 to 0.1 W, a ratio of the heating level (H) to a height of the rotor (HR) in the range from 3 to 5 and a ratio of an enveloping circle diameter (KB) of the container (2), the enveloping circle diameter (KB) being provided at the heating level (H), to an enveloping circle diameter (KR) of the rotor (11) in the range from 1.20 to 1.4, the rotational speed of the rotor (11) is in the range from 370 to 450 rpm.

4. Liquid heater (1) according to one of claims 1 to 3, **characterised in that** the heating device (13) is an induction heating device (13a).

5. Liquid heater (1) according to claim 4, **characterised in that** the base (3) comprises a bottom (7) and a side surface (8) projecting therefrom, which is arranged next to the lateral surface (9) of the container (2) positioned on the base (3) and, preferably up to the heating level (H), comprises a magnetic field-generating mechanism of the induction heating device (13a) and preferably also the bottom (7) of the base comprises a magnetic field-generating mechanism of the induction heating device (13a).

6. Liquid heater (1) according to one of claims 1 to 5, **characterised in that** the container (2) is electrically insulated from the base (3).

7. Liquid heater (1) according to one of the claims 1 to 6, **characterised in that** the lateral surface (9) of the container (2) is made of metal, in particular stainless steel, at least up to the heating level (H), and is preferably cylindrical.

8. Liquid heater (1) according to one of claims 1 to 7, **characterised in that** at least a bottom side (19) of the container bottom (14) is flat.

9. Liquid heater (1) according to one of the claims 1 to 8, **characterised in that** a top side (20) of the container bottom (14) is flat and preferably the rotor (11) is free of a circular or ring-shaped receptacle for a rotary shaft.

10. Liquid heater (1) according to one of claims 1 to 9, **characterised in that** the second bodies (17) of the drive mechanism (15) are arranged below the bottom (14) of the container (2) positioned on the base.

11. Liquid heater (1) according to one of claims 1 to 10, **characterised in that** the rotor (11) is magnetically centred in a state coupled to the drive mechanism (15) by the second bodies (17) of the drive mechanism (15).

12. Liquid heater (1) according to one of claims 1 to 11, **characterised in that** the rotor (11) can be removed from the container (2) without tools and, in particular, is movable in the radial direction (R).

13. Liquid heater (1) according to one of the claims 1 to 12, **characterised in that** the rotor (11) comprises at least two, preferably three, arms (21) extending in a radial direction (R) of the rotor (11), on which arms (21) the first bodies (16) are arranged.

14. Liquid heater (1) according to one of the claims 1 to 13, **characterised in that** the rotor (11) comprises three arms (21) curved in a rotor plane (E), preferably in the direction of rotation (DR), and preferably comprises an elevation (22) projecting in the axial direction (A) as a bearing surface on the side facing the container bottom (14).

15. Method for heating a foamable liquid in a liquid heater (1), wherein the liquid to be heated is received in a container (2) free from a continuous foam surface on its surface, the container (2) is positioned on a base (3), the liquid in the container (2) is heated with a heating device (13) and the liquid in the container (2) is stirred with a stirring device (12), the container (2) comprising a bottom (14) and a lateral surface (9) extending therefrom, which is part of the heating device (13) up to a predetermined heating level (H) of the lateral surface (9), the heating level (H) starting from the bottom (14), and the lateral surface (9) being heated to a heating temperature (TH) up to the heating level (H) in order to heat the liquid, and the stirring device (12) comprising a rotor (11) that is received in the container (2) and comprises magnetic field-generating or magnetisable first bodies (16), and a drive mechanism (15) for the rotor (11), the drive mechanism (15) is received in the base (3) and comprises magnetic field-generating or magnetisable second bodies (17), which drive mechanism (15) rotates the rotor (11) at least at one rotational speed, for which rotation the first bodies (16) are magnetically coupled to the second bodies (17), wherein the rotor (11) sets the received liquid in the container (2) in rotation in an operating state and allows it to rise up the lateral surface (9), **characterised in that** the rotational speed of the rotor (11) lying in a rotational speed range in which the rotor (11), during its rotation, causes a defined minimum amount of the liquid in the container (2) to rise to a height at least equal to the heating level (H) and with which rotational speed range, after the rotation of the rotor (11), a heated liquid is obtained in the container (2), the heated liquid still being free of a continuous foam surface at its surface, wherein, when a liquid with a density in the range of 1.018-1.048 g/cm3 is received in the container (2), a Newton number assigned to the stirring device (12) is between 0.1 and 0.3.

## Revendications

1. Réchauffeur de liquide (1) comprenant un récipient (2) pour recevoir un liquide à chauffer, une base (3) sur laquelle le récipient (2) est positionné, un dispositif de chauffage (13) pour chauffer le liquide dans le récipient (2) et un dispositif d'agitation (12) pour agiter le liquide dans le récipient (2), lequel récipient (2) présente un fond (14) et une surface latérale (9) s'étendant de celui-ci, qui fait partie du dispositif de chauffage (13) jusqu'à une hauteur de chauffage prédéterminée (H) de la surface latérale (9) à partir du fond (14) et présente une température de chauffage (TH) pour chauffer le liquide jusqu'à la hauteur de chauffage (H), et lequel dispositif d'agitation (12) comprend un rotor (11) logé dans le récipient (2) et comportant des premiers corps (16) générant un champ magnétique ou magnétisables, et un dispositif d'entraînement (15) logé dans la base (3) et comportant des seconds corps (17) générant un champ magnétique ou magnétisables pour le rotor (11), lequel dispositif d'entraînement (15) est conçu pour faire tourner le rotor (11) à au moins une vitesse de rotation, pour laquelle les premiers corps (16) sont couplés magnétiquement aux seconds corps (17), le rotor (11) étant conçu pour, dans un état de fonctionnement, mettre en rotation le liquide reçu dans le récipient (2) et le faire monter le long de la surface latérale (9), **caractérisé en ce que** la vitesse de rotation du rotor (11) se situe dans une plage de vitesse dans laquelle une quantité minimale définie de liquide exposée au rotor (11) en rotation dans le récipient (2) atteint une hauteur au moins égale à la hauteur de chauffage (H) et dans laquelle plage de vitesse le liquide chauffé présente une surface exempte d'une couche de mousse continue, dans lequel, dans le cas d'une densité du liquide comprise entre 1,018 et 1,048 g/cm$^3$, un nombre de Newton associé au dispositif d'agitation (12) est compris entre 0,1 et 0,3.

2. Réchauffeur de liquide (1) selon la revendication 1, **caractérisé en ce que**, dans le cas de la densité du liquide comprise entre 1,018 et 1,048 g/cm$^3$, le nombre de Newton associé au dispositif d'agitation (12) est compris entre 0,1 et 0,2.

3. Réchauffeur de liquide (1) selon la revendication 1 ou 2, **caractérisé en ce que**, pour une puissance du rotor (11) comprise entre 0,05 et 0,1 W, un rapport de la hauteur de chauffage (H) à une hauteur du rotor (HR) compris entre 3 et 5 et un rapport d'un diamètre du cercle circonscrit (KB) du récipient (2) prévu à la hauteur de chauffage (H) à un diamètre du cercle enveloppe (KR) du rotor (11) compris entre 1,20 et 1,4, la vitesse de rotation du rotor (11) est comprise entre 370 et 450 tr/min.

4. Réchauffeur de liquide (1) selon l'une des revendications 1 à 3, **caractérisé en ce que** le dispositif de chauffage (13) est un dispositif de chauffage par induction (13a).

5. Réchauffeur de liquide (1) selon la revendication 4, **caractérisé en ce que** la base (3) présente un fond (7) et une surface latérale (8) s'écartant de celui-ci, qui est disposée à côté de la surface latérale (9) du récipient (2) positionné sur la base (3) et présente, de préférence jusqu'à la hauteur de chauffage (H), un dispositif générant un champ magnétique faisant partie du dispositif de chauffage par induction (13a), et de préférence le fond (7) de la base présente également un dispositif générant un champ magnétique faisant partie du dispositif de chauffage par induction (13a).

**6.** Réchauffeur de liquide (1) selon l'une des revendications 1 à 5, **caractérisé en ce que** le récipient (2) est électriquement isolé de la base (3).

**7.** Réchauffeur de liquide (1) selon l'une des revendications 1 à 6, **caractérisé en ce que** la surface latérale (9) du récipient (2) est réalisée, au moins jusqu'à la hauteur de chauffage (H), en métal, notamment en acier inoxydable, et est de préférence de forme cylindrique.

**8.** Réchauffeur de liquide (1) selon l'une des revendications 1 à 7, **caractérisé en ce qu'**au moins une face inférieure (19) du fond du récipient (14) est de forme plane.

**9.** Réchauffeur de liquide (1) selon l'une des revendications 1 à 8, **caractérisé en ce qu'**une face supérieure (20) du fond du récipient (14) est de forme plane et de préférence le rotor (11) est dépourvu d'un logement circulaire ou annulaire pour un arbre rotatif.

**10.** Réchauffeur de liquide (1) selon l'une des revendications 1 à 9, **caractérisé en ce que** les seconds corps (17) du dispositif d'entraînement (15) sont disposés sous le fond (14) du récipient (2) positionné sur la base.

**11.** Réchauffeur de liquide (1) selon l'une des revendications 1 à 10, **caractérisé en ce que** le rotor (11), dans un état couplé au dispositif d'entraînement (15), est centré magnétiquement par les seconds corps (17) du dispositif d'entraînement (15).

**12.** Réchauffeur de liquide (1) selon l'une des revendications 1 à 11, **caractérisé en ce que** le rotor (11) peut être retiré du récipient (2) sans outil et est notamment mobile dans la direction radiale (R).

**13.** Réchauffeur de liquide (1) selon l'une des revendications 1 à 12, **caractérisé en ce que** le rotor (11) présente au moins deux, de préférence trois, bras (21) s'étendant dans une direction radiale (R) du rotor (11), sur lesquels sont disposés les premiers corps (16).

**14.** Réchauffeur de liquide (1) selon l'une des revendications 1 à 13, **caractérisé en ce que** le rotor (11) présente trois bras (21) situés dans un plan du rotor (E), de préférence courbés dans le sens de rotation (DR), et présente de préférence une élévation (22) faisant saillie dans la direction axiale (A) comme surface d'appui sur le côté tourné vers le fond du récipient (14).

**15.** Procédé de chauffage d'un liquide moussant dans un réchauffeur de liquide (1), dans lequel le liquide à chauffer, exempt d'une couche de mousse continue à sa surface, est reçu dans un récipient (2), le récipient (2) est positionné sur une base (3), le liquide dans le récipient (2) est chauffé avec un dispositif de chauffage (13) et le liquide dans le récipient (2) est agité avec un dispositif d'agitation (12), lequel récipient (2) présente un fond (14) et une surface latérale (9) s'étendant de celui-ci, qui fait partie du dispositif de chauffage (13) jusqu'à une hauteur de chauffage prédéterminée (H) de la surface latérale (9) à partir du fond (14) et est chauffée à une température de chauffage (TH) pour chauffer le liquide jusqu'à la hauteur de chauffage (H), et lequel dispositif d'agitation (12) comprend un rotor (11) logé dans le récipient (2) et comportant des premiers corps (16) générant un champ magnétique ou magnétisables, et un dispositif d'entraînement (15) logé dans la base (3) et comportant des seconds corps (17) générant un champ magnétique ou magnétisables pour le rotor (11), lequel dispositif d'entraînement (15) fait tourner le rotor (11) à au moins une vitesse de rotation, pour laquelle les premiers corps (16) sont couplés magnétiquement aux seconds corps (17), le rotor (11) étant conçu pour mettre en rotation, dans un état de fonctionnement, le liquide reçu dans le récipient (2) et le faisant monter le long de la surface latérale (9), **caractérisé en ce que** la vitesse de rotation du rotor (11) se situe dans une plage de vitesse dans laquelle le rotor (11), pendant sa rotation, fait monter une quantité minimale définie du liquide dans le récipient (2) à une hauteur au moins égale à la hauteur de chauffage (H) et dans laquelle plage de vitesse, après la rotation du rotor (11), un liquide chauffé est obtenu dans le récipient (2), qui reste exempt d'une couche de mousse continue à sa surface, dans lequel, lorsqu'un liquide d'une densité comprise entre 1,018 et 1,048 g/cm$^3$ est reçu dans le récipient (2), un nombre de Newton associé au dispositif d'agitation (12) est compris entre 0,1 et 0,3.

Fig. 1

Fig. 2

Fig. 3

Fig. 4

Fig. 5

Fig. 6a  Fig. 6b  Fig. 6c  Fig. 6d

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 9107533 B2
- US 2013081545 A1
- US 2018126339 A1

**In der Beschreibung aufgeführte Nicht-Patentliteratur**

- **BRANSBURG-ZABARY S** ; **VIROZUB A** ; **MIMOUNI FB**. Human Milk Warming Temperatures Using a Simulation of Currently Available Storage and Warming Methods. *PLoS ONE*, 10 June 2015, vol. 10 (6)